# EUROPÄISCHE PATENTSCHRIFT

(11) **EP 3 698 111 B1**
(45) Veröffentlichungstag und Bekanntmachung des Hinweises auf die Patenterteilung: **31.07.2024**
(21) Anmeldenummer: 18786322.0
(22) Anmeldetag: 12.10.2018
(51) Int. Cl.: G01K 1/08, F24C 7/08, G01K 1/14

(54) **TEMPERATURÜBERWACHUNGSVORRICHTUNG UND HAUSHALTSGERÄT MIT DER TEMPERATURÜBERWACHUNGSVORRICHTUNG**
TEMPERATURE MONITORING DEVICE AND DOMESTIC APPLIANCE COMPRISING THE TEMPERATURE MONITORING DEVICE
DISPOSITIF DE SURVEILLANCE DE TEMPÉRATURE ET APPAREIL DOMESTIQUE ÉQUIPÉ D'UN DISPOSITIF DE SURVEILLANCE DE TEMPÉRATURE

(30) Priorität: 18.10.2017 DE 102017218554
(43) Veröffentlichungstag der Anmeldung: 26.08.2020
(73) Patentinhaber: BSH Hausgeräte GmbH, 81739 München (DE)
(72) Erfinder: BLATNIK, Gregor, 2381 Podgorje (SI); GRUBER, Borut, 2380 Slovenj Gradec (SI); SEMEJA, Uros, 3327 Smartno ob Paki (SI)
(86) Internationale Anmeldenummer: PCT/EP2018/077919
(87) Internationale Veröffentlichungsnummer: WO 2019/076763

(56) Entgegenhaltungen:
- CN-U- 203 705 080
- FR-A1- 2 760 835
- JP-A- S61 176 826
- US-B2- 7 307 246

## Beschreibung

### Gebiet der Erfindung

Die Erfindung betrifft eine Temperaturüberwachung, insbesondere für ein Haushaltsgerät, die einen Temperaturfühler umfasst. Außerdem betrifft die Erfindung ein Haushaltsgerät mit der Temperaturüberwachungsvorrichtung.

### Hintergrund der Erfindung

Aus der chinesischen Gebrauchsmusterveröffentlichung CN 203024206 U ist ein Haushaltsgerät bekannt, das eine Kochstelle für ein Kochgeschirr und eine an der Kochstelle angeordnete Heizspule zum Erhitzen des Kochgeschirrs umfasst. An der Kochstelle ist außerdem ein Schalter angeordnet, an dem ein Temperatursensor und ein Überhitzungssensor angeordnet sind, um das Haushaltsgerät abhängig von der Temperatur des Kochgeschirrs zu steuern.

Das US-Patent US 5,176,451 offenbart einen Temperatursensor für ein Heizgerät, der einen festen zylindrischen Körper mit oberen und unteren Platten an einem Ende des zylindrischen Körpers aufweist. Zwischen den Platten ist ein elektrischer Isolator angeordnet, in dem, umgeben von einem weiteren elektrischen Isolator, ein Thermoelement angeordnet ist. Außerdem ist eine Feder vorgesehen, die die untere Platte des Temperatursensors gegen ein Montageelement vorspannt.

Die US-Offenlegungsschrift US 2015/0233770 A1 offenbart einen Temperatursensor für eine Kochstelle, der aus zwei zylindrischen, teleskopartig relativ zueinander verschiebbaren Elementen besteht, wobei die beiden Elemente gegeneinander mit Federn vorgespannt sind. Das eine Element ist mit einer Platte und einem darunter angeordneten Temperaturdetektor ausgestattet. Zwei der Federn können zum elektrischen Kontaktieren des Temperaturdetektors eingesetzt werden.

Das US-Patent US 8,162,541 B2 offenbart einen Temperatursensor, der ein Gehäuse mit einem Gehäuseboden aufweist. Ein Thermistor ist mit einer Feder gegen einen Kontakt am Boden des Gehäuses vorgespannt. Diese Feder dient auch zur elektrischen Kontaktierung des Thermistors. Der Kontakt ist ebenfalls mit einer Feder elektrisch kontaktiert. Außerdem ist ein die zylindrische Gehäusewand des Sensors innenseitig umschließender zylindrischer Isolator vorgesehen.

Aus der deutschen Offenlegungsschrift DE 10051867 A1 ist ein Fahrzeugheizgerät mit einem Temperaturfühler bekannt, wobei der Temperaturfühler als Kombinationsfühler ausgebildet ist, der neben einem Überhitzungsfühler auch einen Regeltemperaturfühler umfasst. Schließlich offenbart die JP S61 176826 A eine Temperaturüberwachungseinrichtung für ein Kochgeschirr. Ein Temperaturfühler wird mittels eines Federelements gegen eine Temperaturaufnehmplatte vorgespannt, wenn ein Topf auf der Aufnehmplatte hingestellt wird.

### Der Erfindung zugrundeliegende Aufgabe

Der Erfindung liegt die Aufgabe zugrunde, eine verbesserte Temperaturüberwachungsvorrichtung, insbesondere für ein Haushaltsgerät, bereitzustellen. Insbesondere soll mit der Erfindung erreichbar sein, die Temperatur eines Gegenstands, dessen Temperatur überwacht werden soll, genauer zu erfassen. Mit der Erfindung soll auch eine hohe Zuverlässigkeit erreichbar sein. Außerdem liegt der Erfindung die Aufgabe zugrunde, ein Haushaltgerät mit einer verbesserten Temperaturüberwachungsvorrichtung bereitzustellen.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Temperaturüberwachungseinrichtung insbesondere, für ein Haushaltsgerät mit den Merkmalen des Patentanspruchs 1. Die erfindungsgemäße Temperaturüberwachungsvorrichtung umfasst einen ersten Temperaturfühler, ein Fühlergehäuse, das den ersten Temperaturfühler teilweise umschließt, und eine mit dem Fühlergehäuse verbundene Temperaturaufnehmplatte. Weiter umfasst die Temperaturüberwachungsvorrichtung ein erstes Fühlerfederelement, das mit dem Fühlergehäuse einerseits und dem ersten Temperaturfühler anderseits in der Weise in Kraftverbindung steht, dass es den Temperaturfühler gegen die Temperaturaufnehmplatte permanent vorspannt. Dadurch, dass das Fühlergehäuse den ersten Temperaturfühler nur teilweise umschließt, kann der erste Temperaturfühler an der Stelle, an der er nicht von dem Fühlergehäuse umschlossen ist, gegen die Temperaturaufnehmplatte vorgespannt werden. Dadurch, dass der erste Temperaturfühler gegen die Temperaturaufnehmplatte vorgespannt ist, kann die Genauigkeit und Zuverlässigkeit der Temperaturmessung des ersten Temperaturfühlers vorteilhafterweise erhöht werden. Die erfindungsgemäße Temperaturüberwachungseinrichtung weist zusätzlich zu dem ersten Temperaturfühler einen zweiten Temperaturfühler auf, wobei das Fühlergehäuse den zweiten Temperaturfühler teilweise umschließt. Dadurch, dass das Fühlergehäuse den zweiten Temperaturfühler nur teilweise umschließt, kann der zweite Temperaturfühler an der Stelle, an der er nicht von dem Fühlergehäuse umschlossen ist, gegen die Temperaturaufnehmplatte vorgespannt werden. Mit der Erfindung kann erreicht werden, dass durch eine Redundanz der Temperaturfühler eine erhöhte Betriebssicherheit geschaffen wird. Ein weiterer erreichbarer Vorteil ist, dass die Temperaturüberwachungsvorrichtung zwei unterschiedliche Temperaturüberwachungsaufgaben übernehmen kann, zum Beispiel einerseits als Fühler einer Temperaturregelung und andererseits als Fühler einer Überhitzungssicherung.

Im Sinne der vorliegende Erfindung bedeutet "in Kraftverbindung stehen", dass das Fühlerfederelement den Temperaturfühler relativ zum Fühlergehäuse direkt oder indirekt mit einer Kraft beaufschlagt. Dass das Fühlergehäuse mit der Temperaturaufnehmplatte "verbunden" ist, bedeutet vorliegend, das zwischen den Fühlergehäuse und der Temperaturaufnehmplatte eine derartige direkte oder indirekte mechanische Verbindung besteht, dass das Fühlerelement vermittels des Fühlergehäuses gegen die Temperaturaufnehmplatte vorgespannt werden kann.

Die Temperaturaufnehmplatte ist der Teil der Temperaturüberwachungsvorrichtung, der für den Kontakt zu dem Gegenstand vorgesehen ist, dessen Temperatur überwacht werden soll. Die bevorzugte Temperaturaufnehmplatte hat eine im gewöhnlichen Gebrauch dem Gegenstand, dessen Temperatur überwacht werden soll, zugewandte Seite. Besonders vorzugsweise ist diese Seite eine Außenseite der Temperaturüberwachungsvorrichtung. Der Temperaturfühler ist vorzugweise gegen eine Seite der Temperaturaufnehmplatte vorgespannt, die der Seite, die für den Kontakt zu dem Gegenstand, dessen Temperatur überwacht werden soll, vorgesehen ist, gegenüberliegt. Die Seite der Temperaturaufnehmplatte, gegen die der Temperaturfühler vorgespannt ist, befindet sich vorzugweise im Inneren der Temperaturüberwachungsvorrichtung.

Außerdem wird die gestellte Aufgabe durch ein Haushaltsgerät mit den Merkmalen des Anspruchs 9 gelöst. Das Haushaltsgerät weist die Temperaturüberwachungsvorrichtung auf.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

Das bevorzugte Fühlergehäuse weist eine von der Temperaturaufnehmplatte beabstandete Stirnfläche auf. Im Sinne der vorliegenden Erfindung ist die Stirnfläche die der Temperaturaufnehmplatte zugewandte Fläche des Fühlergehäuses. Vorzugsweise ist die Stirnfläche der Seite der Temperaturaufnehmplatte zugewandt, gegen die der Temperaturfühler (oder in bevorzugten, weiter unten diskutierten Ausführungen der Erfindung mehrere Temperaturfühler) vorgespannt ist oder sind.

Vorzugweise ist oder sind Abstandhalter zwischen der Stirnfläche und der Temperaturaufnehmplatte vorgesehen, zum Beispiel in Form von einem oder mehreren Vorsprüngen oder Stegen. Mit diesem oder diesen Abstandhalter(n) kann vorteilhalterweise der Abstand zwischen der Stirnfläche und der Temperaturaufnehmplatte festgelegt werden. Der oder die Abstandhalter sind in einer Ausführung der Erfindung aus dem gleichen Material wie die Temperaturaufnehmplatte oder das Fühlergehäuse ausgebildet. Vorteilhafterweise können sie einteilig mit der Temperaturaufnehmplatte oder einteilig mit dem Fühlergehäuse ausgebildet sein. Die Fläche, oder bei mehreren Vorsprüngen oder Stegen die Summe der Flächen, mit der der oder die Stege oder Vorsprünge die Temperaturaufnehmplatte berühren, beträgt vorzugweise höchstens 20 %, besonders vorzugsweise höchstens 10 %, besonders vorzugsweise höchstens 3 % der dem Fühlergehäuse zugewandten Fläche der Temperaturaufnehmplatte. Alternativ oder zusätzlich beträgt die Fläche, oder bei mehreren Vorsprüngen oder Stegen die Summe der Flächen, mit der der oder die Stege oder Vorsprünge das Fühlergehäuse berühren, vorzugweise höchstens 20%, besonders vorzugsweise höchstens 10%, besonders vorzugsweise höchstens 3% der der Temperaturaufnehmplatte zugewandten Fläche des Fühlergehäuses. Der bevorzugte Abstand zwischen der Temperaturaufnehmplatte und dem Fühlergehäuse beträgt mehr als 0,1 mm (Millimeter), besonders vorzugweise mehr als 0,3 mm, besonders vorzugsweise mehr als 1 mm, besonders vorzugweise mehr als 3 mm.

In einer bevorzugten Ausführung der Erfindung ist die Temperaturaufnehmplatte Teil einer Kappe des Fühlergehäuses. Dabei ist unter "Kappe" im Sinne der vorliegenden Erfindung ein Gegenstand zu verstehen, der das Fühlergehäuse wenigstens teilweise umschließt; besonders vorzugsweise umschließt die Kappe das Fühlergehäuse nur teilweise. Das Fühlergehäuse ist mit der Kappe vorzugweise fest verbunden, und zwar besonders vorzugsweise an einer oder mehreren Stellen der Kappe, die nicht die Temperaturaufnehmplatte bilden. Die Kappe kann zum Beispiel formschlüssig, kraftschlüssig oder durch Kleben mit dem Fühlergehäuse verbunden sein. Beispielsweise kann die Kappe mit Vorsprüngen ausgestattet sein, die in Vertiefungen des Fühlergehäuses eingreifen, oder umgekehrt kann das Fühlergehäuse mit Vorsprüngen ausgestattet sein, die in Vertiefungen der Kappe eingreifen. Die bevorzugte Kappe ist topfförmig ausgebildet mit einem Boden und einem Mantel. Besonders vorzugsweise bildet die Temperaturaufnehmplatte den Boden der Kappe. Besonders vorzugsweise ist der Mantel der Kappe mit dem Fühlergehäuse in Kontakt.

Das bevorzugte Fühlergehäuse besteht aus einem thermisch isolierenden Material, vorzugsweise aus einem Kunststoff. Der bevorzugte Kunststoff ist nicht brennbar. Der bevorzugte Kunststoff ist bei Temperaturen bis 250 °C, vorzugsweise bis 350 °C, vorzugsweise bis 500 °C formstabil. Die bevorzugte Temperaturaufnehmplatte besteht aus einem Metall, z. B. Aluminium oder Stahl. Die bevorzugte Kappe ist einteilig mit der Temperaturaufnehmplatte gebildet. Sie besteht vorzugsweise aus einem Metall, z. B. Aluminium oder Stahl.

In einer bevorzugten Ausführung der Erfindung ist ein zweites Fühlerfederelement mit dem Fühlergehäuse einerseits und dem zweiten Temperaturfühler andererseits in der Weise kraftverbunden, dass es den zweiten Temperaturfühler gegen die Temperaturaufnehmplatte vorspannt. In einer alternativen Ausführung der Erfindung ist das erste Fühlerfederelement nicht nur mit dem ersten sondern auch mit dem zweiten Temperaturfühler in der Weise kraftverbunden, dass es auch den zweiten Temperaturfühler gegen die Temperaturaufnehmplatte vorspannt. Dadurch, dass der zweite Temperaturfühler gegen die Temperaturaufnehmplatte vorgespannt ist, kann die Genauigkeit und Zuverlässigkeit der Temperaturmessung des zweiten Temperaturfühlers vorteilhafterweise erhöht werden.

Das bevorzugte Fühlergehäuse ist mit einer ersten Höhlung ausgestattet, mit der es den ersten Temperaturfühler teilweise umschließt. Ein bevorzugtes Fühlergehäuse ist mit einer zweiten Höhlung ausgestattet, mit der es den zweiten Temperaturfühler teilweise umschließt. In einer alternativen Ausführung der Erfindung werden erste und zweite Temperaturfühler von derselben, ersten Höhlung des Fühlergehäuses teilweise umschlossen.

Vorzugweise stützt sich das erste Fühlerfederelement in der ersten Höhlung ab. Vorzugsweise stützt sich das zweite Fühlerfederelement in der zweiten Höhlung oder alternativ in der ersten Höhlung ab. Das erste Fühlerfederelement stützt sich vorzugweise an dem ersten Temperaturfühler ab. In einer Ausführung der Erfindung stützt sich das erste Fühlerfederelement außerdem an dem zweiten Temperaturfühler ab. In einer bevorzugten Ausführung der Erfindung stützt sich das zweite Fühlerfederelement an dem zweiten Temperaturfühler ab.

Ein bevorzugtes Fühlerfederelement ist eine Schraubenfeder, eine Spiralfeder oder eine Blattfeder. Das Fühlerfederelement besteht vorzugsweise aus Metall, zum Beispiel Federstahl. Es kommen aber auch beliebige andere Typen von Federelementen in Frage, vorausgesetzt, sie können die erfindungsgemäße vorspannende Kraft bewirken.

In einer bevorzugten Ausführung der Erfindung ist der erste oder zweite Temperaturfühler ein reversibler Temperaturfühler. Im Sinne der vorliegenden Erfindung ist ein reversibler Temperaturfühler eine Einrichtung, die in Abhängigkeit der Temperatur, der der Temperaturfühler ausgesetzt ist, reversibel eine Eigenschaft, besonders vorzugsweise eine elektrische Eigenschaft, zum Beispiel die elektrische Leitfähigkeit, die elektrische Kapazität oder die elektrische Induktivität, ändert.

In einer bevorzugten Ausführung der Erfindung ist der erste oder der zweite Temperaturfühler ein irreversibler Temperaturfühler. Im Sinne der vorliegenden Erfindung ist ein irreversibler Temperaturfühler eine Einrichtung, die in Abhängigkeit der Temperatur, der der Temperaturfühler ausgesetzt ist, irreversibel eine Eigenschaft, besonders vorzugsweise eine elektrische Eigenschaft, zum Beispiel den elektrischen Widerstand, die elektrische Kapazität oder die elektrische Induktivität, ändert. Besonders vorzugsweise ist einer der Temperaturfühler der erfindungsgemäßen Temperaturfühlerüberwachungsvorrichtung ein reversibler und ein andere Temperaturfühler der Temperaturüberwachungsvorrichtung ein irreversibler Temperaturfühler. Die Temperaturüberwachungsvorrichtung ist vorzugsweise so ausgestattet, dass die Eigenschaft, die sich in Abhängigkeit der Temperatur, der der Temperaturfühler ausgesetzt ist, ändert, durch eine Auswerteinrichtung, die an die Temperaturüberwachungsvorrichtung anschließbar ist, bestimmbar und mithin auswertbar ist.

Ein bevorzugter reversibler Temperaturfühler ist ein Thermistor, zum Beispiel ein PTC-Thermistor (Positive-Temperature-Coefficient-Thermistor, auch als Kaltleiter bezeichnet) oder ein NTC-Themistor (Negative-Temperature-Coefficient-Thermistor, auch als Heißleiter bezeichnet). Ein bevorzugter irreversibler Temperaturfühler ist eine Temperatursicherung, die einen Stromfluss bei Überschreitung einer vorgegebenen Temperatur unterbricht. Dazu ist die bevorzugte Temperatursicherung mit einem leitenden Schmelzelement verbunden, das oberhalb der festgelegten Temperatur schmilzt und dadurch einen elektrischen Kontakt unterbricht. Die bevorzugten Temperaturfühler umfassen jeweils eine elektrische Zu- und eine Ableitung, die vorzugsweise durch das Fühlergehäuse nach außen geführt werden.

Ein bevorzugtes Haushaltsgerät umfasst eine Kochstelle, in oder auf die ein Kochgeschirr ein- oder aufgesetzt werden kann, besonders vorzugsweise in der Weise, dass das Kochgeschirr in Kontakt mit der Temperaturüberwachungsvorrichtung steht. Besonders vorzugsweise steht das Kochgeschirr in der in oder auf die Kochstelle ein- oder aufgesetzter Position mit der Temperaturaufnehmplatte der Temperaturüberwachungseinrichtung in Kontakt. Der mit der Temperaturüberwachungsvorrichtung in Kontakt stehende Teil des Kochgeschirrs ist vorzugsweise eine Bodenseite des Kochgeschirrs. Im Sinne der vorliegenden Erfindung ist die Bodenseite des Kochgeschirrs die bei gewöhnlichem Gebrauch untere Seite des Kochgeschirrs. Das bevorzugte Kochgeschirr ist ein Topf oder eine Pfanne. Das bevorzugte Kochgeschirr besteht überwiegend aus einem Metall, z. B. Stahl oder Aluminium.

Die bevorzugte Temperaturüberwachungsvorrichtung steht mit einer Geschirrkontaktfeder in Kraftverbindung, um die Temperaturüberwachungsvorrichtung bei in oder auf die Kochstelle ein- oder aufgesetztem Kochgeschirr vorzuspannen, vorzugsweise gegen die Bodenseite des Kochgeschirrs. Die bevorzugte Geschirrkontaktfeder ist eine Schraubenfeder oder eine Blattfeder. Sie besteht vorzugsweise aus Metall, z. B. Federstahl.

Das bevorzugte Haushaltsgerät umfasst ein Heizmittel zum Erhitzen des Kochgeschirrs. Mit dieser Ausführung der Erfindung kann vorteilhaft erreicht werden, dass das Kochgeschirr in der in oder auf die Kochstelle ein- oder aufgesetzten Position durch das Heizmittel erhitzt werden kann. Ein bevorzugtes Heizmittel ist eine elektrische Heizung, z. B. eine Heizspule. Alternativ kommt auch eine Induktionsspule in Frage, die in das Kochgeschirr durch elektrische Induktion Ströme induziert, die das Kochgeschirr erhitzen.

Ein bevorzugtes Haushaltsgerät ist mit einem Regelmittel, vorzugsweise einer elektrischen Regelschaltung, ausgestattet, um das Heizmittel in Abhängigkeit von der von dem ersten oder zweiten, vorzugsweise reversiblen, Temperaturfühler ermittelten Temperatur zu regeln. Ein bevorzugtes Haushaltsgerät umfasst eine Sicherungseinrichtung, um das Heizmittel beim Überschreiten einer vorgegeben Temperatur an dem ersten oder zweiten, besonders vorzugsweise irreversiblen, Temperaturfühler abzuschalten.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1: Eine erfindungsgemäße Temperaturüberwachungsvorrichtung in einer Explosionsdarstellung;
- Figur 2: Eine Querschnittsdarstellung der erfindungsgemäßen Temperaturüberwachungseinrichtung; und
- Figur 3: Der untere Teil eines Haushaltsgeräts in Form eines Kochgeräts mit der erfindungsgemäßen Temperaturüberwachungseinrichtung.

### Detaillierte Beschreibung eines Ausführungsbeispiels der Erfindung

Bei der nachfolgenden Beschreibung von bevorzugten Ausführungsformen der vorliegenden Erfindung bezeichnen gleiche Bezugszeichen gleiche oder vergleichbare Komponenten.

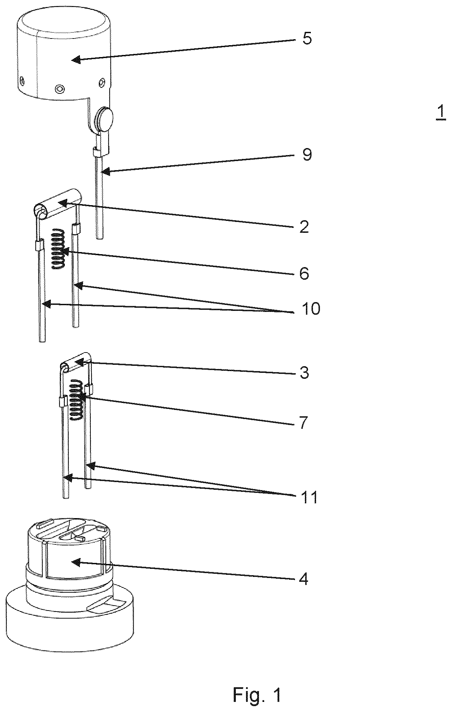

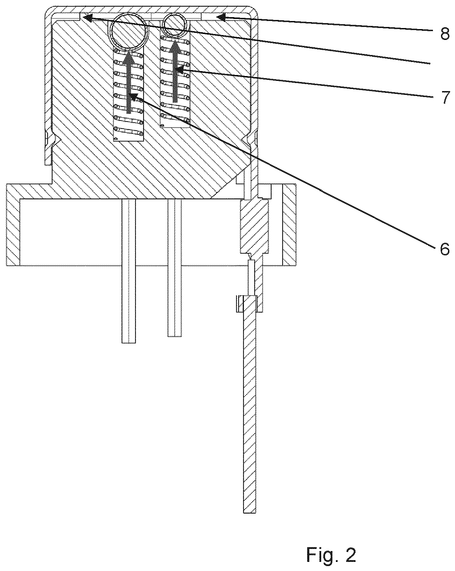

Die in den Figuren beispielhaft dargestellte Temperaturüberwachungsvorrichtung 1 umfasst, wie in Figur 1 am besten zu erkennen, zwei Temperaturfühler 2, 3, von denen der erste Temperaturfühler 2 eine Temperatursicherung und der zweite Temperaturfühler 3 ein Thermistor, z. B. ein NTC-Thermistor, ist. Die Temperaturfühler 2, 3 sind, wie in Figur 2 am besten zu erkennen, von einem ein Fühlergehäuse 4 in der Art teilweise umgeben, dass Sie eine der Stirnseite des Fühlergehäuses 4 gegenüberliegende Seite einer Temperaturaufnehmplatte kontaktieren können. Dazu befinden sich die Temperaturfühler 2, 3 jeweils in einer Höhlung des Fühlergehäuses 4, wobei jede Höhlung zur Temperaturaufnehmplatte hin offen ist. Die Temperaturaufnehmplatte ist der Boden einer topfförmigen Kappe 5, die das Fühlergehäuse 4 teilweise umschließt. Die Temperaturaufnehmplatte hat eine erste, nach außen gerichtete Seite, die für den Kontakt mit dem Gegenstand, dessen Temperatur überwacht werden soll, vorgesehen ist.

Die beispielhafte Temperaturüberwachungsvorrichtung weist, wie ebenfalls am besten in Figur 2 zu sehen, außerdem ein erstes Fühlerfederelement 6 in Form einer Schraubenfeder auf, das mit dem Fühlergehäuse 4 einerseits und dem ersten Temperaturfühler 2 andererseits in der Weise in Kraftverbindung steht, dass es den ersten Temperaturfühler 2 gegen die Temperaturaufnehmplatte vorspannt. Dazu sind der erste Temperaturfühler 2 und das erste Fühlerfederelement 6 in einer ersten Höhlung des Fühlergehäuses 4 angeordnet, und das erste Fühlerfederelement 6 stützt sich an dem Ende der ersten Höhlung ab, das gegenüber einer Öffnung der ersten Höhlung liegt, durch die der erste Temperaturfühler 2 die Temperaturaufnehmplatte kontaktiert. Der erste Temperaturfühler 2 kontaktiert die Temperaturaufnehmplatte auf deren zweiten, nach innen gerichtete Seite, die der ersten Temperaturaufnehmplattenseite, die für den Kontakt mit dem Gegenstand, dessen Temperatur überwacht werden soll, gegenüberliegt.

Außerdem weist die Temperaturüberwachungsvorrichtung ein zweites Fühlerfederelement 7, ebenfalls in Form einer Schraubenfeder, auf, das mit dem Fühlergehäuse 4 einerseits und dem zweiten Temperaturfühler 3 andererseits in der Weise in Kraftverbindung steht, dass es den zweiten Temperaturfühler 3 gegen die Temperaturaufnehmplatte vorspannt. Dazu sind der zweite Temperaturfühler 3 und das zweite Fühlerfederelement 7 in einer zweiten Höhlung des Fühlergehäuses 4 angeordnet, und das zweite Fühlerfederelement 7 stützt sich an dem Ende der zweiten Höhlung ab, das gegenüber einer Öffnung der zweiten Höhlung liegt, durch die der zweite Temperaturfühler 3 die Temperaturaufnehmplatte kontaktiert. Der zweite Temperaturfühler 3 kontaktiert die Temperaturaufnehmplatte auf deren zweiten, nach innen gerichtete Seite, die der ersten Temperaturaufnehmplattenseite, die für den Kontakt mit dem Gegenstand, dessen Temperatur überwacht werden soll, gegenüberliegt.

Die Stirnseite des Fühlergehäuses 4 ist mit in Figuren 1 und 2 gut sichtbaren Rippen 8 ausgestattet. Genauer verlaufen zwei kürzere Rippen senkrecht zu einer längeren Rippe. Die Rippen haben eine Höhe von ca. 1 mm. Wie in Figur 2 dargestellt, stellen die Rippen 8 durch ihre Höhe einen Abstand zwischen Stirnseite des Fühlergehäuses 4 und der dem Fühlergehäuse 4 zugewandten Innenseite der Temperaturaufnehmplatte der Kappe 5 sicher.

Die Kappe 5 besteht aus einem gut wärmeleitenden Metall, z. B. aus Aluminium. Sie ist mit einer Erdungsleitung 9 ausgestattet. Das Fühlergehäuse 4 besteht aus einem gut wärmeisolierenden Material, z. B. aus einem Kunststoff. Zum formschlüssigen Befestigen der Kappe 5 an dem Fühlergehäuse 4 weist der hohlzylindrische Mantel der Kappe 5 an mehreren Stellen nach innen reichende Vorsprünge auf, die in korrespondierende Vertiefungen der Umfangsfläche der im Wesentlichen ebenfalls zylindrischen Fühlergehäuses 4 eingreifen. Außerdem ist das Fühlergehäuse 4 mit vier Kanälen, von denen jeweils zwei von ersten und zweiten Höhlungen durch das Fühlergehäuse 4 hindurch zu dem der Temperaturaufnehmplatte abgewandten Ende des Fühlergehäuses führen, ausgestattet. Durch diese Kanäle werden erste 10 und zweite elektrische Anschlussleitungen 11 des ersten 2 und zweiten Temperaturfühlers 3 geführt.

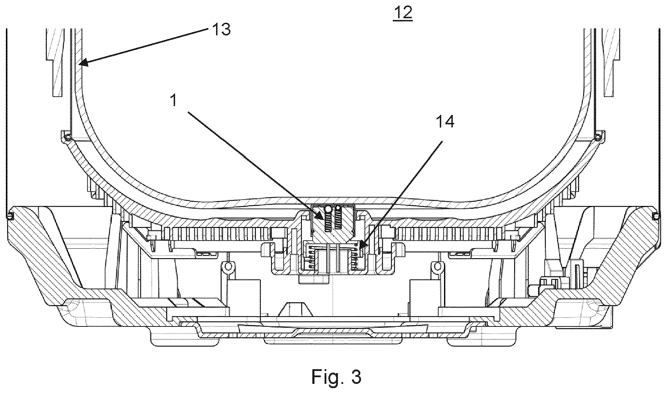

Figur 3 stellt die erfindungsgemäße Temperaturüberwachungsvorrichtung 1 als Teil eines Multikochers als einem beispielhaften erfindungsgemäßen Haushaltsgerät 12 dar. Das Haushaltsgerät 12 umfasst eine Kochstelle, auf die in der Figur ein Kochtopf als Kochgeschirr 13 aufgesetzt ist. Der Boden des Kochgeschirrs steht in Kontakt mit der Temperaturüberwachungsvorrichtung 1, und zwar mit der Temperaturaufnehmplatte der Temperaturüberwachungsvorrichtung 1. Dazu ist die Temperaturüberwachungsvorrichtung 1 mit einem als Schraubenfeder ausgeführten Geschirrkontaktfederelement 14 gegen den Boden des Kochgeschirrs vorgespannt.

Das Haushaltsgerät 12 weist auch ein in der Figur 3 nicht dargestelltes Heizmittel in Form einer Heizspule oder einer anderen Art von elektrischer oder nicht-elektrischer Heizung auf, um das Kochgeschirr 13 zu erhitzen. Eine Regelelektronik als Regeleinrichtung ist sowohl mit der Heizspule als auch mit dem zweiten Temperaturfühler, und zwar über dessen elektrische Anschlussleitungen 11, verbunden, um die Heizspule abhängig von der Temperatur, der der zweite Temperaturfühler ausgesetzt ist zu regeln. Außerdem ist diese Regeleinrichtung mit einer Eingabeeinheit, z. B. bestehend aus einem oder mehreren Schaltern, des Haushaltsgeräts 12 verbunden, an der von einem Benutzer des Haushaltsgeräts 12 eine gewünschte Temperatur eingestellt werden kann. Dadurch ist erreichbar, dass das Kochgeschirr mit Hilfe des Heizmittels und des zweiten Temperaturfühlers auf der eingestellten Temperatur gehalten werden kann.

Außerdem weist das Haushaltsgerät 12 eine Überhitzungssicherung auf, die das Heizmittel ausschaltet, falls der erste Temperaturfühler 2 einer Temperatur ausgesetzt wird, die eine durch den Typ des zweiten Temperaturfühlers bestimmte Temperatur überschreitet. Dies kann beispielsweise dadurch geschehen, dass das Heizmittel eine Heizspule oder eine andere Arte einer elektrischen Heizung ist, und das Heizmittel mit dem ersten Temperaturfühler in Reihe geschaltet ist, wobei der erste Temperaturfühler 2 so eingerichtet ist, dass er unterhalb der bestimmten Temperatur elektrischen Strom zu dem Heizmittel durchleitet, beim Überschreiten der bestimmten Temperatur die Durchleitung aber unterbricht.

Dadurch, dass die Temperaturfühler gegen die Temperaturaufnehmplatte und die Temperaturaufnehmplatte gegen das Kochgeschirr vorgespannt sind, kann die Genauigkeit und Zuverlässigkeit der Temperaturmessung des Temperaturfühlers vorteilhafterweise erhöht werden.

### Bezugszeichenliste

- 1: Temperaturüberwachungsvorrichtung
- 2: Erster Temperaturfühler
- 3: Zweiter Temperaturfühler
- 4: Fühlergehäuse
- 5: Kappe mit Temperaturaufnehmplatte
- 6: Erstes Fühlerfederelement
- 7: Zweites Fühlerfederelement
- 8: Rippen
- 9: Erdungsleitung der Kappe
- 10: Anschlussleitungen des ersten Temperaturfühlers
- 11: Anschlussleitungen des ersten Temperaturfühlers
- 12: Haushaltsgerät
- 13: Kochgeschirr
- 14: Geschirrkontaktfederelement

## Patentansprüche

1. Temperaturüberwachungsvorrichtung (1) für ein Haushaltsgerät (12), die einen ersten Temperaturfühler (2), ein Fühlergehäuse (4), das den ersten Temperaturfühler (2) teilweise umschließt, und eine mit dem Fühlergehäuse (4) verbundene Temperaturaufnehmplatte umfasst, **dadurch gekennzeichnet, dass** ein erstes Fühlerfederelement (6) mit dem Fühlergehäuse (4) einerseits und dem ersten Temperaturfühler (2) andererseits in der Weise in Kraftverbindung steht, dass es den ersten Temperaturfühler (2) gegen die Temperaturaufnehmplatte permanent vorspannt und dass die Temperaturüberwachungsvorrichtung (1) einen zweiten Temperaturfühler (3) aufweist und das Fühlergehäuse (4) den zweiten Temperaturfühler (3) teilweise umschließt.

2. Temperaturüberwachungsvorrichtung (1) nach Anspruch 1, **dadurch gekennzeichnet, dass** eine Stirnfläche des Fühlergehäuses (4) von der Temperaturaufnehmplatte beabstandet ist.

3. Temperaturüberwachungsvorrichtung (1) nach einem er vorangehenden Ansprüche, **dadurch gekennzeichnet, dass** die Temperaturaufnehmplatte Teil einer Kappe (5) auf dem Fühlergehäuse (4) ist.

4. Temperaturüberwachungsvorrichtung (1) nach einem er vorangehenden Ansprüche, **dadurch gekennzeichnet, dass** ein zweites Fühlerfederelement (7) mit dem Fühlergehäuse (4) einerseits und dem zweiten Temperaturfühler (3) andererseits in der Weise in Kraftverbindung steht, dass es den zweiten Temperaturfühler (3) gegen die Temperaturaufnehmplatte vorspannt.

5. Temperaturüberwachungsvorrichtung (1) nach einem er vorangehenden Ansprüche, **dadurch gekennzeichnet, dass** sich das erste Fühlerfederelement (2) einerseits in der Höhlung des Fühlergehäuses (4) und andererseits an dem ersten Temperaturfühler abstützt.

6. Temperaturüberwachungsvorrichtung (1) nach einem er vorangehenden Ansprüche, **dadurch gekennzeichnet, dass** der erste (2) oder der zweite Temperaturfühler (3) ein reversibler Temperaturfühler ist.

7. Haushaltsgerät (12) mit einer Temperaturüberwachungsvorrichtung (1) nach einem der vorangehenden Ansprüche.

8. Haushaltsgerät (12) nach Anspruch 7, **dadurch gekennzeichnet, dass** es eine Kochstelle umfasst, in oder auf die ein Kochgeschirr (13) ein- oder aufgesetzt werden kann, sodass das Kochgeschirr (13) in Kontakt mit der Temperaturüberwachungsvorrichtung (1) steht.

9. Haushaltsgerät (12) nach Anspruch 8, **dadurch gekennzeichnet, dass** die Temperaturüberwachungsvorrichtung (1) mit einem Geschirrkontaktfederelement (14) in Kraftverbindung steht, um die Temperaturüberwachungsvorrichtung (1) bei in oder auf die Kochstelle ein- oder aufgesetztem Kochgeschirr (13) gegen das Kochgeschirr (13) vorzuspannen.

10. Haushaltsgerät (12) nach Anspruch 8 oder 9, **dadurch gekennzeichnet, dass** es Heizmittel zum Erhitzen des Kochgeschirrs umfasst und, dass das Kochgeschirr (13) in der in oder auf die Kochstelle ein- oder aufgesetzten Position durch das Heizmittel erhitzt werden kann.

11. Haushaltsgerät (12) nach einem der Ansprüche 8 bis 10, **dadurch gekennzeichnet, dass** das Haushaltsgerät (12) Regelmittel umfasst, um das Heizmittel in Abhängigkeit von der von dem ersten (2) oder zweiten Temperaturfühler (3) ermittelten Temperatur regelt.

12. Haushaltsgerät (12) nach einem der Ansprüche 8 bis 11, **dadurch gekennzeichnet, dass** das Haushaltsgerät (12) eine Sicherungseinrichtung umfasst, um das Heizmittel beim Überschreiten einer vorgegebenen Temperatur an dem ersten (2) oder zweiten Temperaturfühler (3) abzuschalten.

## Claims

1. A temperature monitoring apparatus (1) for a household appliance (12), which comprises a first temperature probe (2), a probe housing (4), which partly encloses the first temperature probe (2), and a temperature receiving plate connected to the probe housing (4), **characterized in that** a first probe spring element (6) is connected in the manner of a force connection to the probe housing (4) on the one side and the first temperature probe (2) on the other side, so that it permanently pre-tensions the first temperature probe (2) against the temperature receiving plate and that the temperature monitoring apparatus (1) has a second temperature probe (3) and the probe housing (4) partly encloses the second temperature probe (3).

2. The temperature monitoring apparatus (1) as claimed in claim 1, **characterized in that** an end face surface of the probe housing (4) is at a distance from the temperature receiving plate.

3. The temperature monitoring apparatus (1) as claimed in one of the preceding claims, **characterized in that** the temperature receiving plate is part of a cap (5) on the probe housing (4).

4. The temperature monitoring apparatus (1) as claimed in one of the preceding claims, **characterized in that** a second probe spring element (7) is connected in the manner of a force connection to the probe housing (4) on one side and the second temperature probe (3) on the other side so that it pre-tensions the second temperature probe (3) against the temperature receiving plate.

5. The temperature monitoring apparatus (1) as claimed in one of the preceding claims, **characterized in that** the first probe spring element (2) is supported on one side in the cavity of the probe housing (4) and on the other side on the first temperature probe.

6. The temperature monitoring apparatus (1) as claimed in one of the preceding claims, **characterized in that** the first (2) or the second temperature probe (3) is a reversible temperature probe.

7. A household appliance (12) with a temperature monitoring apparatus (1) as claimed in one of the preceding claims.

8. The household appliance (12) as claimed in claim 7, **characterized in that** it comprises a cooktop, into which or onto which an item of cookware; (13) can be inserted or placed, so that the item of cookware (13) is in contact with the temperature monitoring apparatus (1).

9. The household appliance (12) as claimed in claim 8, **characterized in that** the temperature monitoring apparatus (1) has a force connection to a cookware contact spring element (14), in order, for an item of cookware (13) placed in or on the cooktop, to pretension the temperature monitoring apparatus (1) against the item of cookware (13).

10. The household appliance (12) as claimed in claim 8 or 9, **characterized in that** it comprises heating means for heating up the item of cookware and that the item of cookware (13) in the position placed in or on the cooktop, can be heated up by the heating means.

11. The household appliance (12) as claimed in one of claims 8 to 10, **characterized in that** the household appliance (12) comprises closed-loop control means for closed-loop control of the heating means as a function of the temperature determined by the first (2) or second temperature probe (3).

12. The household appliance (12) as claimed in one of claims 8 to 11, **characterized in that** the household appliance (12) comprises a fuse facility for switching off the heating means when a predetermined temperature is exceeded at the first (2) or second temperature probe (3).

## Revendications

1. Dispositif de surveillance de température (1) pour un appareil électroménager (12), qui comprend un premier capteur de température (2), un boîtier de capteur (4), qui entoure en partie le premier capteur de température (2), et une plaque de détection de température reliée au boîtier de capteur (4),
**caractérisé en ce qu'**un premier élément de ressort de capteur (6) est relié de façon à transmettre une force d'une part au boîtier de capteur (4) et d'autre part au premier capteur de température (2), de sorte à pré-contraindre de façon permanente le premier capteur de température (2) contre la plaque de détection de température, et **en ce que** le dispositif de surveillance de température (1) présente un deuxième capteur de température (3) et le boîtier de capteur (4) entoure en partie le deuxième capteur de température (3).

2. Dispositif de surveillance de température (1) selon la revendication 1, **caractérisé en ce qu'**une face d'extrémité du boîtier de capteur (4) est espacée de la plaque de détection de température.

3. Dispositif de surveillance de température (1) selon l'une des revendications précédentes, **caractérisé en ce que** la plaque de détection de température est une partie d'un couvercle (5) sur le boîtier de capteur (4).

4. Dispositif de surveillance de température (1) selon l'une des revendications précédentes, **caractérisé en ce qu'**un deuxième élément de ressort de capteur (7) est relié de façon à transmettre une force d'une part au boîtier de capteur (4) et d'autre part au deuxième capteur de température (3), de sorte à pré-contraindre le deuxième capteur de température (3) contre la plaque de détection de température.

5. Dispositif de surveillance de température (1) selon l'une des revendications précédentes, **caractérisé en ce que** le premier élément de ressort de capteur (2) s'appuie d'une part dans le creux du boîtier de capteur (4) et d'autre part contre le premier capteur de température.

6. Dispositif de surveillance de température (1) selon l'une des revendications précédentes, **caractérisé en ce que** le premier (2) ou le deuxième (3) capteur de température est un capteur de température réversible.

7. Appareil électroménager (12) comprenant un dispositif de surveillance de température (1) selon l'une des revendications précédentes.

8. Appareil électroménager (12) selon la revendication 7, **caractérisé en ce qu'**il comprend un emplacement de cuisson, dans ou sur lequel un ustensile de cuisson (13) peut être inséré ou posé, de sorte que l'ustensile de cuisson (13) entre en contact avec le dispositif de surveillance de température (1).

9. Appareil électroménager (12) selon la revendication 8, **caractérisé en ce que** le dispositif de surveillance de température (1) est relié en transmission de force à un élément de ressort de contact d'ustensile (14), de façon à pré-contraindre le dispositif de surveillance de température (1) contre l'ustensile de cuisson (13) lorsque l'ustensile de cuisson (13) est inséré dans ou posé sur l'emplacement de cuisson.

10. Appareil électroménager (12) selon la revendication 8 ou 9, **caractérisé en ce qu'**il comprend un moyen de chauffage pour chauffer l'ustensile de cuisson, et l'ustensile de cuisson (13) peut être chauffé par le moyen de chauffage dans la position insérée dans ou posée sur l'emplacement de cuisson.

11. Appareil électroménager (12) selon l'une des revendications 8 à 10, **caractérisé en ce que** l'appareil électroménager (12) comprend un moyen de régulation pour réguler le moyen de chauffage en fonction de la température détectée par le premier (2) ou le deuxième (3) capteur de température.

12. Appareil électroménager (12) selon l'une des revendications 8 à 11, **caractérisé en ce que** l'appareil électroménager (12) comprend un dispositif de sécurité pour couper le moyen de chauffage lors d'un dépassement d'une température prescrite au niveau du premier (2) ou du deuxième (3) capteur de température.
